# EUROPEAN PATENT SPECIFICATION

(11) **EP 3 533 326 B1**
(45) Date of publication and mention of the grant of the patent: **02.11.2022**
(21) Application number: 16913460.8
(22) Date of filing: 16.08.2016
(51) Int. Cl.: A01L 5/00, A01L 7/00, A01K 13/00

(54) **PROTECTOR FOR ANIMAL HOOVES**
SCHUTZ FÜR TIERHUFE
ÉLÉMENT DE PROTECTION POUR SABOTS ET ONGLONS D'ANIMAUX

(43) Date of publication of application: 04.09.2019
(73) Proprietor: Evo Horse S.L, 33300 Villaviciosa (Asturias) (ES)
(72) Inventor: PEREIRA SUÁREZ, Florentino, 33300 Villaviciosa (Asturias) (ES); BERND WERNER, Jung, 33300 Villaviciosa (Asturias) (ES); VILLASEVIL FLORENSA, Albert, 33300 Villaviciosa (Asturias) (ES)
(74) Representative: Clarke Modet & Co.
(86) International application number: PCT/ES2016/070603
(87) International publication number: WO 2018/033650

(56) References cited:
- WO-A1-98/19525
- WO-A1-2014/203195
- WO-A1-2015/158935
- WO-A2-2007/030497
- DE-A1-102006 006 880
- US-A- 591 510
- US-A- 4 744 422
- US-A1- 2006 064 950
- US-A1- 2012 018 175
- US-A1- 2014 007 548

## Description

### Field of the invention

The present invention refers to a hoof protector for animals, specially intended for being applied to horse hooves, as a convenient, comfortable non-permanent, non-atrophying protection means, and being capable of adapting to any possible situation, without interfering with the natural biomechanics of the animal while moving or in stance, or affecting performance of the inner structures of the equine foot.

### Background of the invention

The traditional means for protecting horse hooves, which appeared during the Middle Ages and became popular in the Western world from the Industrial Revolution onwards, consist of the classical rigid horseshoes, made of different metal alloys, being fixed to the hoof mainly by means of nails and entailing a permanent protection against wear, with the drawback of being highly atrophying and also showing other side effects that appear in the long-term.

Nowadays, there are attempts to improve this traditional version with the use of flexible and absorbent materials, mainly plastic and rubber which are made from the combination of several components, being reinforced with a metal alloy sheet therein, thus avoiding loss and breakage thereof, and spreading nail vibration onto a bigger surface. Although these last embodiments involve a significant improvement compared to the traditional version thereof, they continue being a permanent support, with all that it involves (overgrowth of the hoof horn due to no wear, occurrence of leverage effect which compromise the soft tissues of limbs, infections of plantar tissues such as the white line and/or the frog, etc.)

On the other hand, both conventional horseshoes and the above mentioned improved version of them, only provide partial hoof protection, particularly against wear of the lower surface thereof. However, they do not protect either the hoof dorsal or front or side surface, or the hoof palmar surface or rear side.

Recently, some non-atrophying solutions have been developed intended to protect both the sole and wall, even protecting the bulbs. In this sense, three different approaches can be cited which are described below.

The first protection approach commonly known as "Glue-ons", as it can be seen in WO2009142801, US00D685142S, and the Spanish Utility Model ES1072993U, consists of a lower sole which is coupled onto the hoof base, and which can be attached onto the front and side surface of said hoof through an upper wall. These protections use an adhesive to be fixed to the hoof surface, which hinders easy and quick frequent removal thereof.

The second protection approach refers to what is commonly known as "Integral Boots", to which US8291683B2, US20050072128, A1US4981010, EP25457721A2, US20050166556A1, US5715661A and US6694713B1 pertain, consisting of a lower sole being coupled onto the hoof base, an upper wall being coupled to the front and side surface of said hoof, and a third layer of a different material enclosing the upper periphery of protection, above the coronary band of the equine foot and, particularly, around the short pastern bone. These protections remain attached to the hoof in a timely fashion, thus allowing frequent removal in an easy and quick manner. This type of boots, however, feature several important drawbacks:
- Firstly, since they are not adaptable, they do not achieve a tight fitting to the equine foot, which causes a double impact during the phase of striking the ground (the boot impacts firstly and then the equine foot), generating high insecurity in the horse.
- Secondly, since a tight fitting is not achieved it is easier for them to turn around, especially upon diagonal interference (when a hind foot strikes a forefoot) and/or asymmetric gaits (when a toe reaches the ground with a side before the other).
- Third, since they do not achieve a tight fitting, they can generate friction which will end up causing serious galls.
- Fourth, as they are so high they interfere with the horse comfort and with the biomechanics of the bottom of the limb, since during the suspension phase movement of the short pastern bone is hindered by the front portion of the protection, while during the stance phase the caudal portion of the protection hinders the long and short pastern bone downward movement.
- The fifth inconvenient is that they are very heavy, which may alter acceleration of the lower part of the limb, producing a greater stretching of the limb ligaments.
- The sixth inconvenient is that they allow entry of particles of different sizes and, due to the closed design of the protection, these cannot get out, favouring the presence of galls if they are used demandingly and in a prolonged manner.

The third protection approach, refers to what is commonly known as "Sports Boots", being described in US4744422A, US20110219732A1, US8413412B2, US20130008139A1, US5661958, USD440363, PCT/ES20141070325 and EP2409565A1, comprising a lower sole that couples onto the hoof base, an upper wall that couples onto the front and side surface of said hoof, and a third rear part that couples onto the rear side of the hoof. These protections use different systems so as to remain attached to the hoof in a timely fashion, thus allowing frequent removal, in an easy, quick and comfortable way. The main drawbacks found in the different models making up this type of equine protections or boots are:
- None of them can regulate the height of the rear portion thereof in a bilateral or unilateral way, which prevents them from being used in equine feet having higher heels (referred to as club feet).
- Due to their indivisible character, they do not allow any adaptation to the animal feet beyond tightening or size selection.
- Attachments being used among the different elements are of a non-elastic or totally elastic nature. The former alter the maximum expanding capacity of the soft tissues of the foot during the stance phase, thus altering the comfort of the horse. With the latter being fully elastic, as in PCT ES 2014/070325, although featuring a good adaptability, the excess of elasticity generates friction at subcutaneous level, causing occurrence of serious sores in the areas of the foot that feature more mobility, and increasing the risk of loss.
- The anchoring elements, strips, Velcro, etc., that the different models comprise, only work in a longitudinal plane, which considerably increases the risk for losing the protection during the suspension phase, since in this phase the horse hoof, when pivoting over its centre, leans the clamps (front area) onto the protection, causing detachment between the lower part of the boot, at the heel height, and the horse hoof. This separation can only be avoided if there is some kind of mechanism that acts on the transverse plane, of which the existing models lack.

Document WO 2015/158935 relates to an animal hoof protector comprising a lower cover (2) that can be coupled to the base and side surface of the hoof, consisting of a thermoformable material; a heel pad (3) made of rubber; a front plate (4) for connecting the lower cover and the heel pad, made of a thermoplastic material; and an intermediate cushioning part (19) consisting of a flexible and padded strip placed around the foot (1).

### Description of the invention

The object of the present invention is to solve the above mentioned problems and to:
- Allow three-dimensional deformation of all the elements of the hoof horn, both when the horse is in stance, and when it is performing any type of movement or activity on any type of ground and at any speed.
- Provide a protection suitable both against wear and bumps and against any other aggression that can be caused to any part of the animal hoof (front, side, back and lower area).
- Allow the correct operation of the inner tissues, thus preventing them from atrophying and promoting their development, functionality and health.
- Allow the correct operation of all parts of the limb, avoiding interference with the movement ranges of the different joints and ligaments forming it.
- Provide a protector for animal hooves which can adapt to any asymmetry or shape of the hoof in every part thereof (including the bulbs and heels). With that purpose, apart from the design, the protection of the invention is made up of a material which, upon heat application or by any other method, is capable of deforming according to the shape of the hoof, then keeping the obtained shapes thus providing a tight fitting which avoids occurrence of double impacts that generate insecurity, and of empty spaces that increase the risk of losing the boot and generate a leverage effect which can cause unnecessary stress of the limb tissues.
- Ensure a compact, flexible and stable attachment among the different components of the protector, so that they provide the animal with a security and comfort feeling, both when not moving and in any phase of the horse gait, but mainly during the hoof suspension and landing.
- Prevent debris and liquid from accumulating (water, sweat and any other), by means of a design providing these to go out and enhancing aeration or transpiration thereof, mainly from the areas being beyond the coronary band and highly sensitive to galls.
- Avoid the presence of elements that may directly harm the hoof horn and/or the limbs in case of interference.
- Provide a protector for horse hooves which features easy and quick mounting and dismounting, and which do not require special strength or knowledge for direct application thereof.
- Allow adding additional traction elements widely used under snow conditions and/or in jumping competitions and raid in the open air, known as roughs.
- Have an extremely light weight so as to reduce further accelerations of the limb and avoid unnecessary tension in the soft tissues thereof.
- Feature anchoring elements or systems that operate diagonally so as to cause an effect both in the longitudinal plane and in the transverse one, thus preventing the boots from being lost.

As it has been indicated above, the protector of the invention is of the type consisting of a base being coupled to the animal hoof, having a lower support sole, a rear shield closing the base at the back, a protecting skin attached to and fixed onto the inner surface of the protecting shield, and also including means for connecting the rear shield to the base.

According to the invention, the sole of the protector base has, from the rear edge to the neighbourhood of the front edge, a longitudinal central area being flexible at the outside, which allows transverse deformation of said sole. According to an embodiment, the sole has at the outside area thereof, a longitudinal central area of a thickness lower than that of said sole, so as to define the elastically flexible longitudinal central area mentioned above. The bottom of this longitudinal central area of the sole of a lower thickness, may be longitudinally crossed by alternate grooves and ribs, thus forming an accordion-like structure that will enable transverse deformation.

According to another characteristic of the invention, the sole of the base will preferably be of a slightly curved configuration, with convexity oriented towards the inner side of the base, so as to cause the enclosure of said base wall over the animal hoof during the gait phase, thus reducing the risk of losing the protection.

The base assembly is intended to be used as a means for protecting the hoof of the animal legs, and is configured in such a way that it can be tightly coupled onto the hoof. To comply with this, the base will be preferably made of a thermoformable material, for example, a thermoplastic material, the purpose of which is to provide the user, by applying heat or by other methods, with a base featuring permanent deformation so as to achieve the perfect adaptation to the geometry of the hoof on which it is to be placed. In order to improve adaptation thereof, the base will have ribs on its wall that will allow opening through holes intended to improve adaptation without risk of breakage. Moreover, the base will feature a different geometry depending on it being intended for the fore or the hind feet of the animal.

The sole of the base forming the protector has, according to the invention, two grooves through which corresponding straps pass upwardly, those straps running over inner slots of the sole, and projecting from the rear edge thereof for it to be anchored in buckles which are arranged at the bottom of the protector rear shield.

In the protector of the invention, the rear shield has a central opening which is limited at the upper and lower part thereof by flexible upper and lower stripes. Furthermore, this shield is provided with front, upper and lower extensions, through which said shield is related to the walls of the base.

The front lower extensions of the shield show limited elastic deformation capacity, which increases towards the end of said extensions. This characteristic can be achieved, for example, by reducing the thickness of the front lower extensions in the end portion thereof. For example, said extensions can have, at the inner surface thereof, a central longitudinal slot or recess, along which holes are drilled that are facing holes of the base wall, for anchoring screws to pass through.

The connection means between the rear shield and the base comprise two upper side connectors and two lower side anchoring elements. The upper side connectors are made up of corresponding flexible bands having limited elasticity which are pivotally connected to the front upper extensions of the shield and to the upper connecting areas of the base wall. The lower side anchoring elements consist of at least a screw bolt passing through and fixing each lower front extension of the shield to lower connecting areas of the base wall.

The pivoting connection between the two upper side connectors and the upper side extensions of the shield are made up of a screw bolt.

The upper front extensions of the shield, at the inner surface thereof and in coincidence with the connecting point of the upper side connectors, can be provided with a polygonal slot coinciding with that of the nut being part of the pivoting connection between said upper side connectors and upper front extensions of the shield, thus enabling screwing and tightening between the screw and nut.

Regarding the bands forming the upper side connectors, these have a longitudinal alignment of holes, two of which are selected for being passed through by screws forming the pivotally connections between said bands and the base wall and upper side extensions of the shield. Furthermore, these bands include a closed contour which is elastically deformable by traction, up to a limit point. This closed contour can be located at one of the ends of the bands, and anchored therethrough to locking levers pivotally fixed to the upper connecting areas of the base wall.

The above locking levers may comprise two arms, an upper one and a lower one, both articulated to each other at on the ends thereof. The lower arm is pivotally fixed to the upper connecting area of the base wall. Both arms, at the opposing surfaces thereof, are provided with mutual interlocking conformations, in the closed position, and with a passage for receiving and retaining the band closed contour forming the side connectors.

### Brief description of the drawings

The attached drawings show a non-limiting embodiment, wherein:
- Figure 1 is a front perspective of a horse hoof wearing the protection of the invention.
- Figure 2 is a similar view to figure 1 showing an embodiment variant.
- Figure 3 is a rear perspective of the protection mounted in figure 2.
- Figures 4 and 5 are lower and upper perspectives, respectively, of the base of the protection.
- Figure 6 is a perspective exploded view of the rear shield and skin.
- Figure 7 is a front elevated view of the rear shield.
- Figure 8 is a perspective exploded view of the rear shield and skin.
- Figure 9 is a perspective exploded view of the locking lever.
- Figure 10 is a plan view of an upper side connector.
- Figure 11 is a perspective view of the strap connecting the base and the rear shield.

### Detailed description of an embodiment

Constitution, characteristics and advantages of the protection of the invention may be better understood with the following description, referring to the embodiment shown in the above listed drawings.

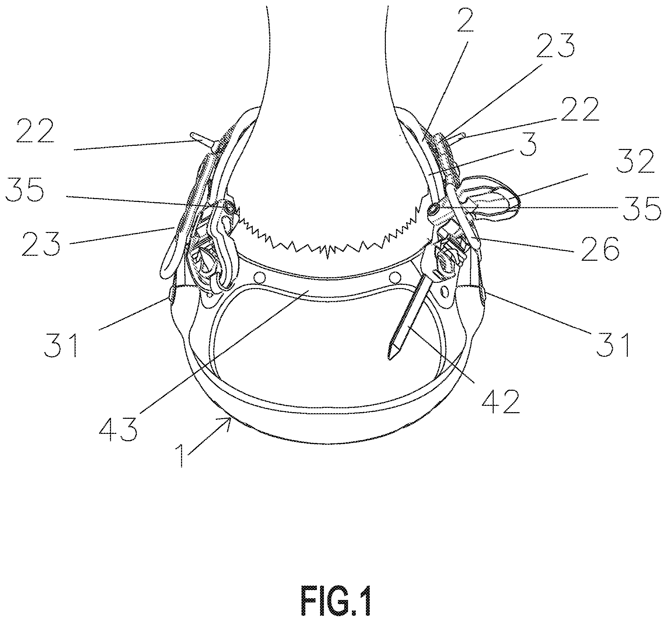

As it can be appreciated in figures 1 to 3, the protector of the invention comprises a base (1), configured to be coupled onto the animal hoof on which is to be mounted, a rear shield (2), closing the base (1) at the rear part thereof, a protecting skin (3) associated with and fixed to the inner surface of the protecting shield, and means for connecting the rear shield (2) to the base (1).

The base (1) will be of an elastically flexible nature, featuring great abrasion resistance and will be preferably made of a thermoformable material, which will enable permanent conformation thereof onto the hoof, by applying heat.

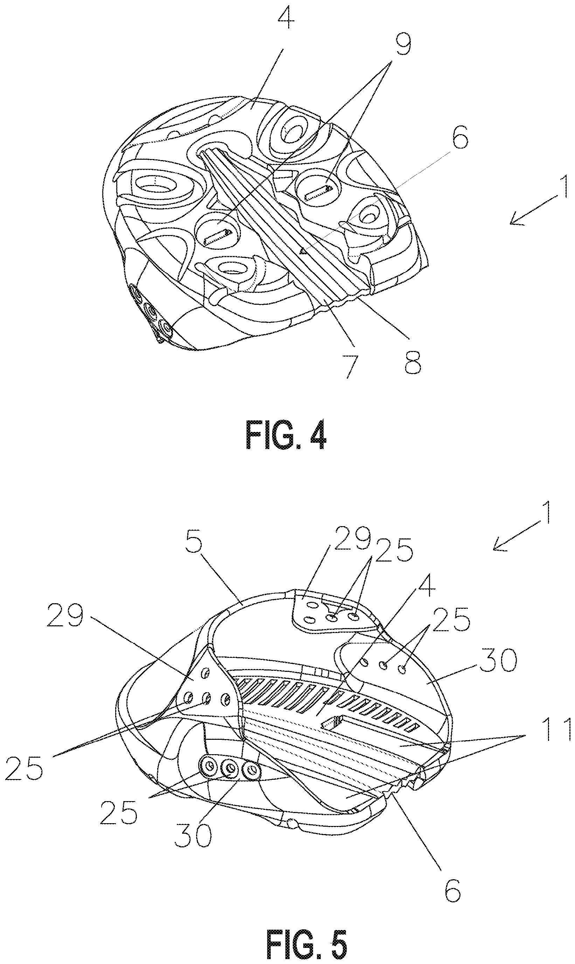

As it can be seen in figures 4 and 5, the base (1) comprises a sole (4) and a side wall (5). The sole (4) is preferably slightly curved, with its concavity oriented inwardly. It is intended for producing the closure of the wall (5) and shield (2) over the animal hoof during the gait phase.

At the outside, the sole (4) has a longitudinal central area (6) of a lower thickness which is elastically flexible in a transverse direction, and it may have an accordion-like structure, having alternate longitudinal grooves (7) and ribs (8), thus providing the protector with a flexibility that allows it to adapt to all natural deformations which are produced in the hoof horn of the animal hoof during the different gait phases.

The wall (5) surrounds the sole along the front and side edges thereof, being also possible for it to be partially surrounded at its rear edge.

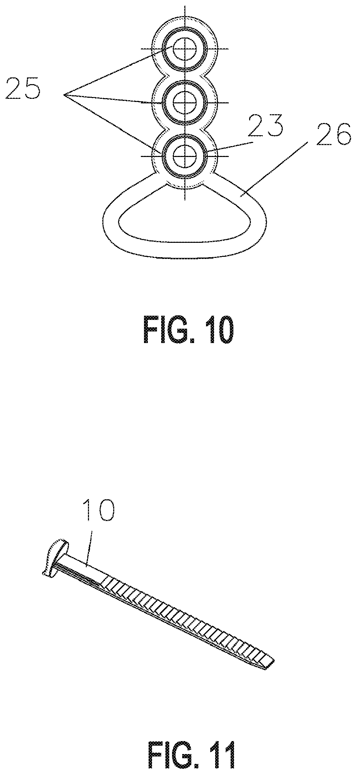

In the sole (4) two through grooves (9) are drilled through which corresponding toothed straps (10) are introduced, figure 11, running over the inner side of the sole along the slots (11), figure 5, from which these project for being attached to the rear shield (2), as it will be set forth below.

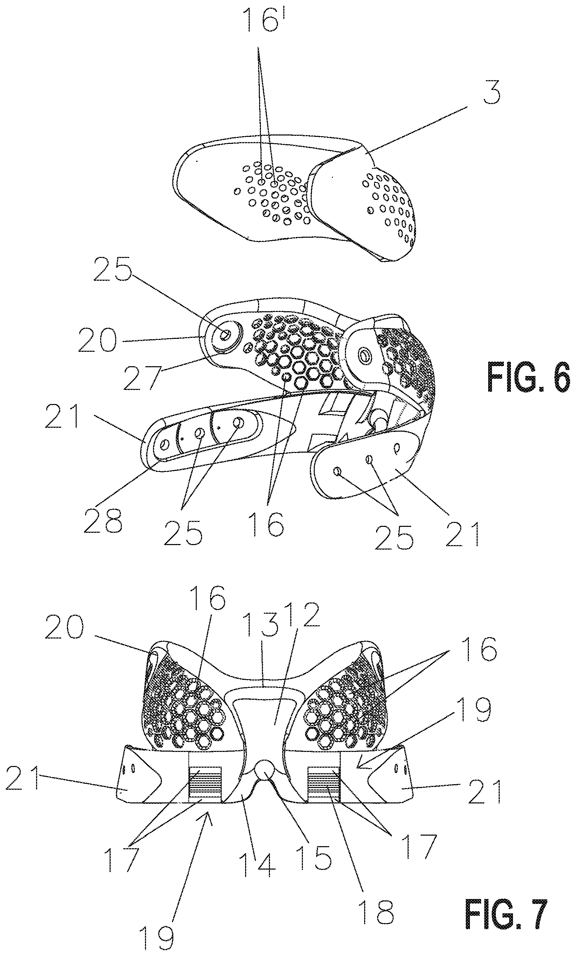

The rear shield (2), figures 6 and 7, is designed for fitting to and covering the rear hoof of the animal, and it comprises a wall having a central opening (12), being limited by an upper stripe (13) and a flexible lower stripe (14) flexible, the upper one (13) preferably featuring a circular section, and the lower one (14) having an upward angular layout and being finished by a spherical broadening (15) at the vertex. The rest of the shield wall have air vents (16). Inside, the wall of the rear shield has two pairs of passages (17), located at both sides of the central opening (12), with a cogged portion (18) between them, configuring buckles (19) through which cogged straps (10) are introduced and fixed. The wall of the rear shield is also provided with upper (20) and lower (21) front extensions, through which the shield is related to the base walls by pivotally connecting means. The lower front extensions (21) will preferably be of flexible and slightly elastic nature, for example, by reducing thickness thereof.

The skin (3) is attached and fixed onto the inner surface of the rear shield, for example by means of elastic rivets (22), figures 1 to 3, introduced through coinciding holes of both components. This skin is also provided with air vents (16').

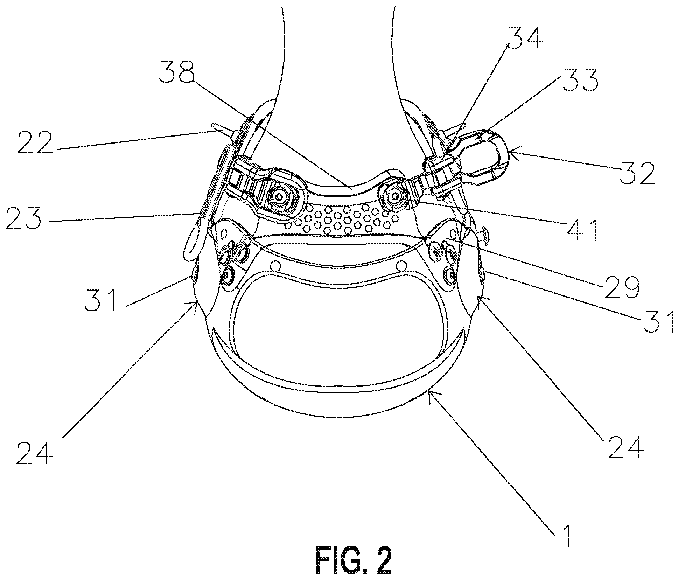

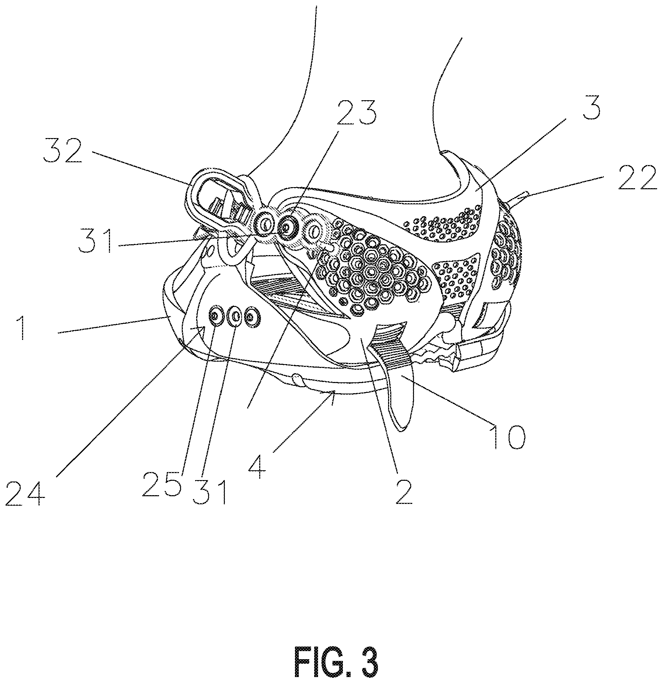

The rear shield (2) relates to the base wall through two upper side connectors (23) and two lower side anchoring elements (24), figures 2 and 3.

The upper side connectors (23), figure 10, consist of bands of an elastically flexible nature, having a longitudinal alignment of connecting holes (25) and an end or intermediate closed contour (26).

The upper front extension (20) of the rear shield (2) also have, figure 6, a connecting hole (25) from the bottom of an inner slot (27) featuring a polygonal contour, in which a nut is housed, not shown, wherein a screw defining a pivoting connection is screwed.

The lower front extension (21) of the rear shield (2) is also provided, figure 6, with an alignment of connecting holes (25) from the bottom of a longitudinal slot (28) having said extensions inside.

In turn, the base wall (1) has, figure 5, upper connecting areas (29) having connecting holes (25), and lower connecting areas (30), also with connecting holes (25).

With the constitution described, the rear shield (2) is associated to the base wall (1) through pivoting connections made up of a screw (31), figures 1 to 3, introduced through connecting holes (25) being selected from the lower front extension (21) of the shield (2), figure 6, and the lower connecting area (30) of the base wall, figure 5, on one side. On the other side, the upper side connectors (23) are connected, figure 3, also pivotally, by means of a screw (31) introduced through one of the connecting holes (25), figure 10, of said connectors, and the connecting hole (25) of the upper front extension (20) of the rear shield (2), figure 6. Through the closed contour (26), the upper side connectors (23), figure 10, are connected to locking levers (32), figures 1 to 3.

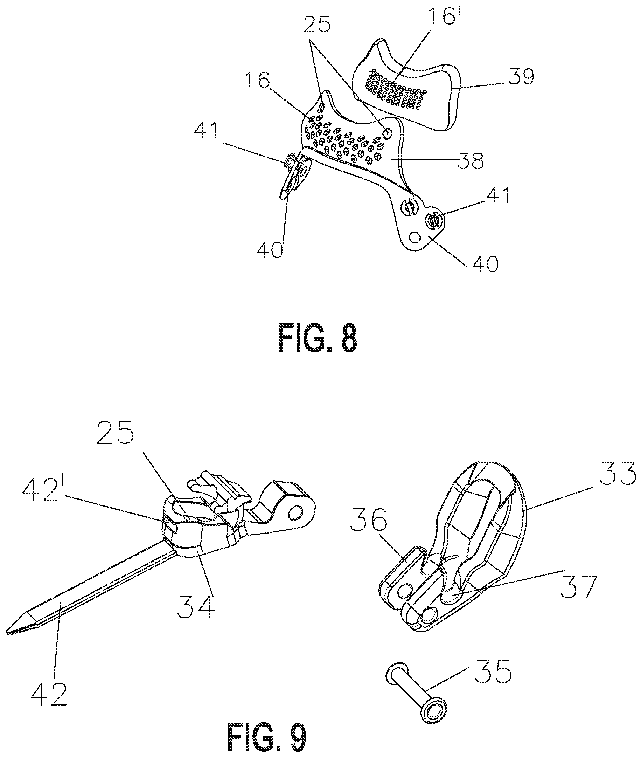

These locking levers (32), as shown in figure 9, comprise an upper arm (33) and a lower arm (34), articulated to each other at one end through a pin (35). The lower arm (34) has a connecting hole (25) which faces one of the connecting holes (25) of the upper connecting area (29), figure 5, of the base (1), for a connecting screw to pass through, not shown, which constitutes a pivoting attachment or connection between the locking lever (32) and the base (1).

The upper (33) and lower (34) arms have, at the opposing surface thereof, figure 9, conformations (36) for their mutual interlocking, upon attaching both arms. They are also provided, also the upper arm (33), with a passage (37) intended to receive the rib forming the closed contour (26) of the upper side connector (23), figure 10, for holding it.

As it is shown in figure 2, the protector can also include a front shield (38), to the inner surface of which a front skin (39) is attached and fixed, figure 8, similarly to the arrangement described for the rear shield (2). This front shield is configured for coupling and fixing, at a side thereof, to the base wall, and for fixing to the locking lever (32), as it is shown in figure 2. For that, the front shield (38) is provided with lower extensions (40) carrying rivets (41) which are introduced through the connecting holes (25) of the upper connecting area (29), figure 5, of the base (1). Near the upper edge, this front shield (38) is provided with two connecting holes (25) for fixing by means of screws (41) of the lower arm (34) of the locking lever (32). Both the front shield (38) and the front skin (39) are provided with air vents (16-16') on its wall.

The locking lever (32), figure 9, may be provided, as an extension of the lower arm (34), of a strip (42) being introduced through the groove (42'), so as to secure the closing position, wherein both arms, upper (33) and lower (34), are attached and anchored through the conformations (36).

All the components described will be preferably made of thermoplastic materials, which provide certain flexibility to said components.

The front (39) and rear (3) skins will be breathable and having anti-frictional wear, made of, for instance, neoprene or materials with similar characteristics.

## Claims

1. Animal hoof protector, comprising a base (1) coupled onto the animal hoof, having a lower supporting sole (4); a rear shield (2) closing the base at the back; a protecting skin (3), attached and fixed onto the inner surface of the rear shield; and means for connecting the rear shield (2) to the base (1), wherein:
- The sole (4) of the base (1) has, from the rear edge and up to the neighbourhood of the front edge, an elastically flexible longitudinal central area (6), which allow transverse deformation of said sole;
- The rear shield (2) has a central opening (12) which is limited at the upper and lower part thereof by a flexible upper stripe (13) and lower stripe (14), and is provided with upper (20) and lower (21) front expansions, through which said shield is related to the walls of the base (1);
- The connecting means between the rear shield (2) and base (1) comprise two upper side connectors (23) and two lower anchoring elements (24); whose upper side connectors (23) comprise corresponding flexible bands featuring limited elasticity, which are pivotally connected to upper front extensions (20) of the shield and to upper connecting areas (29) of the wall of the base (1), and whose lower side anchoring elements (24) consist of at least one screw bolt passing through and fixing each lower front extension (21) of the shield to lower connecting areas (30) of the base wall,
the animal hoof protector wherein the sole (4) of the base (1) has in the outer area, a longitudinal central area (6) of a lower thickness than said sole so as to define the flexible longitudinal central area, the bottom of the longitudinal centra area (6) of the sole (1) of lower thickness is longitudinally crossed by alternate grooves (7) and ribs (8), the sole (4) of the base (1) has a curved configuration, with convexity oriented towards the inner side of the base (1), and wherein the stripe (14) that limits at the lower part thereof, the central opening (12) of the shield, follows an upward angular layout, and is riveted by a spherical broadening (15) on the vertex.

2. Protector according to claim 1, **characterized in that** the base is made of a thermoformable material.

3. Protector according to any of the preceding claims, **characterized in that** the wall (5) of the base (1) is grooved with ribs which allow a better adaptation by opening through holes without this is compromised.

4. Protector according to claim 1, **characterized in that** the sole (4) of the base (1) has two grooves (9) through which straps (10) pass through upwardly, running over inner slots (11), and projecting from the rear edge thereof to be anchored in buckles (19) configured in the lower part of the rear shield (2), at both sides of the central opening (12) of said shield.

5. Protector according to claim 1, **characterized in that** the lower front extensions (21) of the shield feature limited deformation elastic capacity, increasing towards the end of said extension.

6. Protector according to claims 1 and 5, **characterized in that** the lower front extensions (21) of the shield have, at the inner surface thereof, a longitudinal slot (28) through which holes (25) facing holes of the base wall (1) are drilled for the screw or screw nuts to pass through, defining the lower side anchoring elements between the rear shield (2) and the base wall.

7. Protector according to claim 1, **characterized in that** the wall of the rear shield (2) is provided, at both sides of the central opening, with air vents (16).

8. Protector according to claim 1, **characterized in that** the pivoting connection between upper side connectors and upper front extensions of the shield consists of a screw and a nut.

9. Protector according to claims 1 and 8, **characterized in that** the upper front extensions (20) of the shield have, at the inner surface thereof and in coincidence with the connecting point with the upper side connectors (23), an inner slot (27), of a polygonal contour, coinciding with that of the nut being part of the pivoting connection between said upper side connectors and upper front extensions (20) of the shield.

10. Protector according to any of the preceding claims, **characterized in that** the bands forming the upper side connectors have a longitudinal alignment of connecting holes (25), two of which are selected for being passed through by screws forming the pivotally connections between said bands and the base wall (1) and upper side extensions of the shield, and a closed contour (26) elastically deformable by traction.

11. Protector according to claim 10, **characterized in that** the closed contour (26) is located at one of the ends of the upper side connectors (23) and through said contour it anchors to locking levers (32) being pivotally fixed to upper connecting areas (29) of the wall of the base (1).

12. Protector according to claims 1 and 11, **characterized in that** the locking levers (32) comprise two arms, an upper one (33) and a lower one (34), articulated to each other at one of their ends by means of a pin (35), whose lower arm (34) is pivotally fixed to the upper connecting area (29) of the base wall, and whose upper (33) and lower (34) arms are provided, at facing surfaces thereof, with mutual interlocking conformations (36) in its closed position, and a passage (37) for receiving and retaining the closed contour (26) of the band forming the upper side connectors (23).

13. Protector according to claim 1, **characterized in that** it includes a front shield (38) which is anchored at the lower part thereof by means of screws to the base wall and defining the upper areas to which the upper side connectors (23) are pivotally connected.

## Patentansprüche

1. Tierhufschutz, umfassend eine auf den Tierhuf gekoppelte Basis (1), die eine untere Stützsohle (4) aufweist; ein die Basis nach hinten abschließendes Hinterschild (2); eine auf der Innenseite des Hinterschildes angebrachte und befestigte Schutzhaut (3); und Mittel zum Verbinden des Hinterschildes (2) mit der Basis (1), wobei:
- die Sohle (4) der Basis (1) vom hinteren Rand bis in die Nähe des vorderen Randes einen elastisch nachgiebigen Längsmittelbereich (6) aufweist, der eine Querverformung der Sohle ermöglicht;
- das Hinterschild (2) eine zentrale Öffnung (12) aufweist, die im oberen und unteren Teil davon durch einen flexiblen oberen Streifen (13) und unteren Streifen (14) begrenzt ist, und mit oberen (20) und unteren (21) vorderen Erweiterungen versehen ist, durch die das Schild mit den Wänden der Basis (1) in Verbindung steht;
- die Verbindungsmittel zwischen dem Hinterschild (2) und der Basis (1) zwei obere seitliche Verbinder (23) und zwei untere Verankerungselemente (24) umfassen; deren obere seitliche Verbinder (23) zugehörige flexible Bänder mit begrenzter Elastizität umfassen, die schwenkbar mit oberen vorderen Verlängerungen (20) des Schildes und mit oberen Verbindungsbereichen (29) der Wand der Basis (1) verbunden sind, und deren untere seitliche Verankerungselemente (24) aus mindestens einem Schraubenbolzen bestehen, der durch jede untere vordere Verlängerung (21) des Schildes hindurchgeht und diese an unteren Verbindungsbereichen (30) der Basiswand befestigt,
wobei die Sohle (4) der Basis (1) des Tierhufschutzes im äußeren Bereich einen Längsmittelbereich (6) mit einer geringeren Dicke als die Sohle aufweist, um den flexiblen Längsmittelbereich zu definieren, wobei der Boden des Längsmittelbereichs (6) der Sohle (1) mit geringerer Dicke in Längsrichtung von abwechselnden Rillen (7) und Rippen (8) durchzogen ist, wobei die Sohle (4) der Basis (1) eine gekrümmte Konfiguration aufweist, mit einer zur Innenseite der Basis (1) hin ausgerichteten Konvexität, und wobei der Streifen (14), der im unteren Teil davon die zentrale Öffnung (12) des Schildes begrenzt, einer nach oben gerichteten Winkelanordnung folgt und durch eine kugelförmige Verbreiterung (15) auf dem Scheitelpunkt vernietet ist.

2. Schutz nach Anspruch 1, **dadurch gekennzeichnet, dass** die Basis aus einem thermoformbaren Material besteht.

3. Schutz nach einem der vorhergehenden Ansprüche, **dadurch gekennzeichnet, dass** die Wand (5) der Basis (1) mit Rippen gerillt ist, die eine bessere Anpassung durch Öffnung von Durchgangslöchern ermöglichen, ohne dass diese beeinträchtigt werden.

4. Schutz nach Anspruch 1, **dadurch gekennzeichnet, dass** die Sohle (4) der Basis (1) zwei Rillen (9) aufweist, durch die Riemen (10) nach oben hindurchgeführt werden, die über innere Schlitze (11) verlaufen und vom hinteren Rand davon abstehen, um in Schnallen (19) verankert zu werden, die im unteren Teil des Hinterschildes (2) zu beiden Seiten der zentralen Öffnung (12) des Schildes ausgebildet sind.

5. Schutz nach Anspruch 1, **dadurch gekennzeichnet, dass** die unteren vorderen Verlängerungen (21) des Schildes eine begrenzte Verformungselastizität aufweisen, die zum Ende der Verlängerung hin zunimmt.

6. Schutz nach Anspruch 1 und 5, **dadurch gekennzeichnet, dass** die unteren vorderen Verlängerungen (21) des Schildes an der Innenseite davon einen Längsschlitz (28) aufweisen, durch den Löcher (25) gebohrt sind, die Löchern der Basiswand (1) gegenüberliegen und durch die die Schraube oder die Schraubenmuttern hindurchgehen, wobei die unteren seitlichen Verankerungselemente zwischen dem Hinterschild (2) und der Basiswand definiert werden.

7. Schutz nach Anspruch 1, **dadurch gekennzeichnet, dass** die Wand des Hinterschildes (2) auf beiden Seiten der zentralen Öffnung mit Luftauslässen (16) versehen ist.

8. Schutz nach Anspruch 1, **dadurch gekennzeichnet, dass** die schwenkbare Verbindung zwischen den oberen seitlichen Verbindern und den oberen vorderen Verlängerungen des Schildes aus einer Schraube und einer Mutter besteht.

9. Schutz nach Anspruch 1 und 8, **dadurch gekennzeichnet, dass** die oberen vorderen Verlängerungen (20) des Schildes an der Innenseite davon und in Übereinstimmung mit dem Verbindungspunkt mit den oberen seitlichen Verbindern (23) einen inneren Schlitz (27) mit polygonaler Kontur aufweisen, der mit dem der Mutter übereinstimmt, die Teil der schwenkbaren Verbindung zwischen den oberen seitlichen Verbindern und den oberen vorderen Verlängerungen (20) des Schildes ist.

10. Schutz nach einem der vorhergehenden Ansprüche, **dadurch gekennzeichnet, dass** die die oberen seitlichen Verbinder bildenden Bänder eine Längsausrichtung von Verbindungslöchern (25) aufweisen, von denen zwei ausgewählt sind, um von Schrauben durchdrungen zu werden, die die Schwenkverbindungen zwischen den Bändern und der Basiswand (1) und den oberen seitlichen Verlängerungen des Schildes bilden, und eine geschlossene Kontur (26) aufweisen, die durch Zug elastisch verformbar ist.

11. Schutz nach Anspruch 10, **dadurch gekennzeichnet, dass** die geschlossene Kontur (26) an einem der Enden der oberen seitlichen Verbinder (23) angeordnet ist und durch diese Kontur hindurch an Verriegelungshebeln (32) verankert ist, die schwenkbar an oberen Verbindungsbereichen (29) der Wand der Basis (1) befestigt sind.

12. Schutz nach Anspruch 1 und 11, **dadurch gekennzeichnet, dass** die Verriegelungshebel (32) zwei Arme umfassen, einen oberen (33) und einen unteren (34), die an einem ihrer Enden mittels eines Stifts (35) gelenkig miteinander verbunden sind, dessen unterer Arm (34) schwenkbar an dem oberen Verbindungsbereich (29) der Basiswand befestigt ist, und dessen oberer (33) und unterer (34) Arm an ihren einander zugewandten Flächen mit gegenseitig ineinandergreifenden Ausformungen (36), und zwar in ihrer geschlossenen Position, und mit einen Durchgang (37) zur Aufnahme und zum Festhalten der geschlossenen Kontur (26) des die oberen seitlichen Verbinder (23) bildenden Bandes versehen sind.

13. Schutz nach Anspruch 1, **dadurch gekennzeichnet, dass** er ein Vorderschild (38) einschließt, das an dem unteren Teil davon mittels Schrauben an der Basiswand verankert ist und die oberen Bereiche definiert, mit denen die oberen seitlichen Verbinder (23) schwenkbar verbunden sind.

## Revendications

1. Protecteur de sabot et d'onglon d'animal, comprenant une base (1) couplée au sabot ou onglon de l'animal, ayant une semelle de support inférieure (4) ; un bouclier arrière (2) fermant la base à l'arrière ; une peau protectrice (3), attachée et fixée sur la surface interne du bouclier arrière ; et des moyens pour connecter le bouclier arrière (2) à la base (1), dans lequel :
- La semelle (4) de la base (1) présente, depuis le bord arrière et jusqu'au voisinage du bord avant, une zone centrale longitudinale (6) élastiquement flexible, qui permet une déformation transversale de ladite semelle ;
- Le bouclier arrière (2) a une ouverture centrale (12) qui est limitée à sa partie supérieure et inférieure par une bande supérieure (13) et une bande inférieure (14) flexibles, et est pourvu d'expansions avant supérieures (20) et inférieures (21), par lesquelles ledit bouclier est relié aux parois de la base (1) ;
- Les moyens de connexion entre le bouclier arrière (2) et la base (1) comprennent deux connecteurs latéraux supérieurs (23) et deux éléments d'ancrage inférieurs (24) ; dont les connecteurs latéraux supérieurs (23) comprennent des bandes flexibles correspondantes présentant une élasticité limitée, qui sont connectées de manière pivotante aux extensions frontales supérieures (20) du bouclier et aux zones de connexion supérieures (29) de la paroi de la base (1), et dont les éléments d'ancrage latéraux inférieurs (24) consistent en au moins un boulon à vis traversant et fixant chaque extension frontale inférieure (21) du bouclier aux zones de connexion inférieures (30) de la paroi de la base,
le protecteur de sabot ou onglon d'animal dans lequel la semelle (4) de la base (1) a dans la zone extérieure, une zone centrale longitudinale (6) d'une épaisseur inférieure à celle de ladite semelle de manière à définir la zone centrale longitudinale flexible, le fond de la zone centrale longitudinale (6) de la semelle (1) d'épaisseur inférieure est traversé longitudinalement par des rainures (7) et des nervures (8) alternées, la semelle (4) de la base (1) a une configuration incurvée, avec une convexité orientée vers le côté intérieur de la base (1), et dans laquelle la bande (14) qui limite à sa partie inférieure l'ouverture centrale (12) du bouclier, suit une disposition angulaire ascendante, et est rivetée par un élargissement sphérique (15) au sommet.

2. Protecteur selon la revendication 1, **caractérisé en ce que** la base est réalisée dans un matériau thermoformable.

3. Protecteur selon l'une quelconque des revendications précédentes, **caractérisé en ce que** la paroi (5) de la base (1) est rainurée avec des nervures qui permettent une meilleure adaptation en ouvrant des trous traversants sans que cela soit compromis.

4. Protecteur selon la revendication 1, **caractérisé en ce que** la semelle (4) de la base (1) présente deux rainures (9) à travers lesquelles passent les sangles (10) vers le haut, en passant sur des fentes intérieures (11), et en faisant saillie de son bord arrière pour être ancrées dans des boucles (19) configurées dans la partie inférieure du bouclier arrière (2), de part et d'autre de l'ouverture centrale (12) dudit bouclier.

5. Protecteur selon la revendication 1, **caractérisé en ce que** les extensions inférieures avant (21) du bouclier présentent une capacité élastique de déformation limitée, augmentant vers l'extrémité de ladite extension.

6. Protecteur selon les revendications 1 et 5, **caractérisé en ce que** les extensions avant inférieures (21) du bouclier présentent, sur leur surface interne, une fente longitudinale (28) à travers laquelle sont percés des trous (25) en regard des trous de la paroi de base (1) pour le passage de la vis ou des écrous de vis, définissant les éléments d'ancrage latéraux inférieurs entre le bouclier arrière (2) et la paroi de base.

7. Protecteur selon la revendication 1, **caractérisé en ce que** la paroi du bouclier arrière (2) est pourvue, de part et d'autre de l'ouverture centrale, d'aérations (16).

8. Protecteur selon la revendication 1, **caractérisé en ce que** la liaison pivotante entre les connecteurs latéraux supérieurs et les extensions avant supérieures du bouclier consiste en une vis et un écrou.

9. Protecteur selon les revendications 1 et 8, **caractérisé en ce que** les extensions frontales supérieures (20) du bouclier ont, sur leur surface interne et en coïncidence avec le point de connexion avec les connecteurs latéraux supérieurs (23), une fente interne (27), d'un contour polygonal, coïncidant avec celui de l'écrou faisant partie de la connexion pivotante entre lesdits connecteurs latéraux supérieurs et les extensions frontales supérieures (20) du bouclier.

10. Protecteur selon l'une quelconque des revendications précédentes, **caractérisé en ce que** les bandes formant les connecteurs latéraux supérieurs présentent un alignement longitudinal de trous de connexion (25), dont deux sont choisis pour être traversés par des vis formant les liaisons pivotantes entre lesdites bandes et la paroi de base (1) et les extensions latérales supérieures du bouclier, et un contour fermé (26) élastiquement déformable par traction.

11. Protecteur selon la revendication 10, **caractérisé en ce que** le contour fermé (26) est situé à l'une des extrémités des connecteurs latéraux supérieurs (23) et, à travers ledit contour, il s'ancre à des leviers de verrouillage (32) fixés de manière pivotante à des zones de connexion supérieures (29) de la paroi de la base (1).

12. Protecteur selon les revendications 1 et 11, **caractérisé en ce que** les leviers de verrouillage (32) comprennent deux bras, un supérieur (33) et un inférieur (34), articulés l'un à l'autre à l'une de leurs extrémités au moyen d'un axe (35), dont le bras inférieur (34) est fixé de manière pivotante à la zone de liaison supérieure (29) de la paroi de la base, et dont les bras supérieur (33) et inférieur (34) sont pourvus, sur leurs surfaces se faisant face, de conformations (36) s'emboîtant mutuellement dans sa position fermée, et d'un passage (37) pour recevoir et retenir le contour fermé (26) de la bande formant les connecteurs latéraux supérieurs (23).

13. Protecteur selon la revendication 1, **caractérisé en ce qu'**il comprend un bouclier avant (38) qui est ancré à sa partie inférieure au moyen de vis à la paroi de base et définissant les zones supérieures auxquelles les connecteurs latéraux supérieurs (23) sont reliés de manière pivotante.
